# EUROPEAN PATENT SPECIFICATION

(11) **EP 2 000 574 B1**
(45) Date of publication and mention of the grant of the patent: **29.04.2020**
(21) Application number: 08155978.3
(22) Date of filing: 09.05.2008
(51) Int. Cl.: D06F 37/02, D06F 37/14, D06F 37/06

(54) **Rotating tub body and drum-type washing machine having the same**
Rotierender Laugenbehälterkörper und Trommelwaschmaschine damit
Corps de cuve rotative et machine à laver de type à tambour doté de celui-ci

(30) Priority: 07.06.2007 KR 20070055701
(43) Date of publication of application: 10.12.2008
(73) Proprietor: Samsung Electronics Co., Ltd., Suwon-si, Gyeonggi-do, 443-742 (KR)
(72) Inventor: Jeong, Haeng Maan, Gyeonggi-do (KR); Kahm, Byoung Mock, Gwonseon-gu Suwon-si Gyeonggi-do (KR); Lee, Hong Yeol, Sanggal-dong Giheung-eup Yongin-si Gyeonggi-do (KR)
(74) Representative: Grünecker Patent- und Rechtsanwälte PartG mbB

(56) References cited:
- EP-A1- 0 557 572
- EP-A2- 1 174 536
- DE-A1- 1 958 076
- DE-B3- 10 260 023
- FR-A1- 2 255 411

## Description

### 1. Field

The present invention relates to a drum type washing machine having a cylindrical rotating tub body. More particularly, the present invention relates to a cylindrical rotating tub body, which is formed by rolling a plate such that both ends of the plate are connected to each other, and a drum-type washing machine having the same.

### 2. Description of the Related Art

In general, a drum-type washing machine is a device that washes laundry loaded in a drum by moving the laundry upward and then dropping the laundry from the top to the bottom of the drum. As disclosed in Korean Patent Unexamined Publication No. 2006-107036, a drum-type laundry machine according to the related art includes a housing forming an external appearance of the washing machine, a water tub, which is installed in the housing to contain water therein, and a rotating tub, which is rotatably installed in the water tub and rotates by receiving the rotating force generated from a driving motor. Therefore, as the rotating tub rotates in the water tub, the laundry moves upward together with washing water along an inner peripheral surface of the rotating tub and then drops, so that the laundry is washed.

The rotating tub includes a cylindrical rotating tub body, which is open at a front surface and a rear surface thereof, a front cover, which covers a front surface of the rotating tub body and has an opening at a center portion thereof to allow the laundry to be introduced into the rotating tub body, and a rear cover, which covers a rear surface of the rotating tub body and receives power from the driving motor. The rotating tub is provided at an inner peripheral surface thereof with a plurality of lifters, which are spaced apart from each other in the circumferential direction to lift the laundry upward.

Recently, a drum-type washing machine capable of improving washing efficiency using a concave-convex structure has been suggested. According to the above drum-type washing machine, a plurality of concave-convex sections are provided at an inner surface of a rotating tub body such that the laundry can be washed by the friction with the inner peripheral surface of the rotating tub, and lifter installation sections are formed in the circumferential direction alternately with the concave-convex section, so that the washing performance is improved due to the concave-convex structure.

However, since the concave-convex sections and the lifter installation sections are alternately installed on the inner peripheral surface of the rotating tub body, a strength of the concave-convex sections is increased due to the irregular structure thereof, but a strength of the lifter installation section is decreased due to an installation hole to install the lifter.

Accordingly, if the rotating tub body is manufactured in a cylindrical shape by rolling a plate having a predetermined length and width after forming the concave and convex structure and the lifter installation section on the plate, the lifter installation section having a relative low strength is extremely deformed as compared with the concave-convex structure. As a result, although the rotating tub body must be uniformly deformed into the cylindrical structure through the rolling process, the rotating tub body may be irregularly deformed about the lifter installation section.

DE 10 260 023 discloses a drum-type washing machine that comprises a rotating tub body and a water tub. The rotating tub body comprises a plurality of lifter installation sections with corresponding lifters attached thereto. The lifters are provided on an inner peripheral surface of the rotating tub body and are spaced apart from each other in circumferential direction.

### SUMMARY

It is an object of the present embodiment to provide a rotating tub body and a drum-type washing machine having the same, in which a concave-convex structure and a lifter installation section are uniformly deformed to obtain a cylindrical rotating tub body, which simultaneously is reinforced.

Additional aspects and/or advantages will be set forth in part in the description which follows and, in part, will be apparent from the description, or may be learned by practice of the invention.

The object is solved by the features of claim 1 or 8.

The reinforcement sections may extend such that the reinforcement sections are located above and below the concave-convex sections when viewed in a width direction of the concave-convex sections.

The reinforcement sections may be formed on the frames while being spaced apart from the concave-convex sections.

The reinforcement sections may be formed by processing a portion of the rotating tub body such that the portion is recessed at a first side of the rotating tub body and is protruded at a second side of the rotating tub body.

The reinforcement sections may have a shape identical to a shape of the concave-convex parts included in the concave-convex sections.

The reinforcement sections may be disposed in parallel to the concave-convex parts located at both edges of the concave-convex sections.

The foregoing and/or other aspects are achieved by providing a drum-type washing machine, which includes such rotating tub body.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a sectional view representing a drum-type washing machine according to a first embodiment;
FIG. 2 is an exploded perspective view representing a rotating tub, which is applied to the drum-type washing machine according to the first embodiment;
FIG. 3 is a development view representing a rotating tub body, which is applied to the drum-type washing machine according to the first embodiment;
FIG. 4 is an enlarged view of IV portion shown in FIG. 2; and
FIG. 5 is an exploded perspective view representing a rotating tub, which is applied to the drum type washing machine according to a second embodiment.

### DETAILED DESCRIPTION OF THE EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

Hereinafter, a drum-type washing machine according to a first embodiment will be described in detail with reference to accompanying drawings.

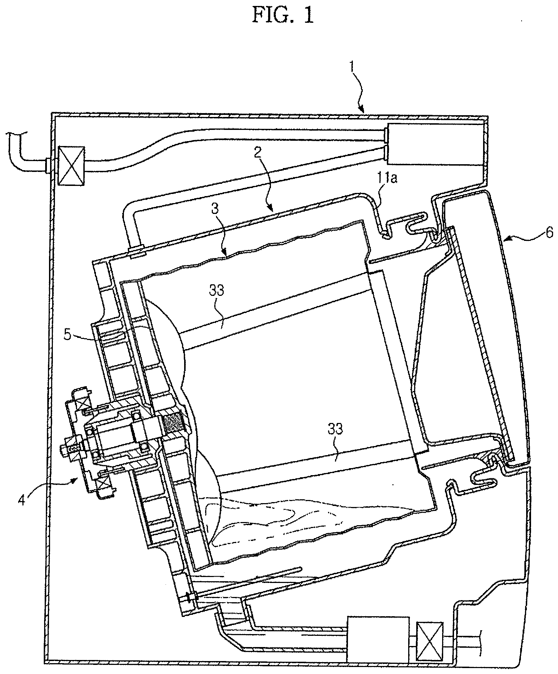

As shown in FIG. 1, a drum-type washing machine according to the present embodiment includes a housing 1, which forms an external appearance of the washing machine, a water tub 2, which is installed in the housing to contain water therein, a rotating tub 3, which is rotatably installed in the water tub 2, a driving motor 4, which transfers power to the rotating tub 3 to rotate the rotating tub 3 such that washing and dehydration processes are performed relative to laundry loaded in the rotating tub 3, and a shaft flange 5, which is fixed to a rear surface of the rotating tub 3 such that the driving force from the driving motor 4 is uniformly transferred to the rotating tub 3.

The water tub 2 and the rotating tub 3 are open at front center portions thereof such that the laundry is able to be introduced into the rotating tub 3 or to be withdrawn from the rotating tub 3. A door 6 is hinged to the housing such that the open front portions of the water tub 2 and a rotating tub 3 are open/closed. Lifters 33 are disposed on the inner peripheral surface of the rotating tub 3 such that the laundry moves upward and drops according to a reversible rotation of the rotating tub 3, thereby washing the laundry.

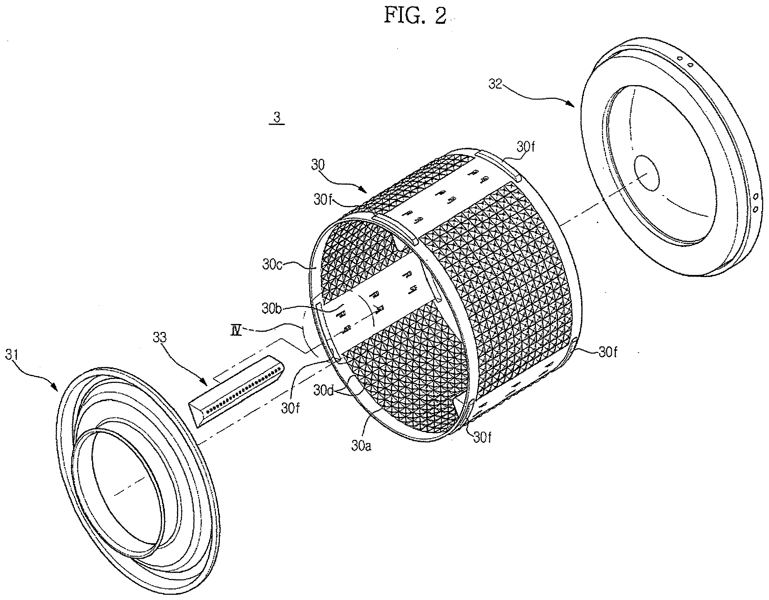

As shown in FIG. 2, the rotating tub 3 includes a rotating tub body 30, which has a cylindrical shape and is transversely disposed with open front and rear sides, and a couple of covers 31 and 32 which cover the open front and rear sides of the rotating tub body 30. The covers 31 and 32 include a front cover 31 which is open at a center portion while covering the front side of the rotating tub 30 such that the laundry is introduced into the rotating tub 3 and a rear cover 32, which covers the rear side of the rotating tub 3 and has a shaft flange 5 fixed thereto to receive power from the driving motor 4.

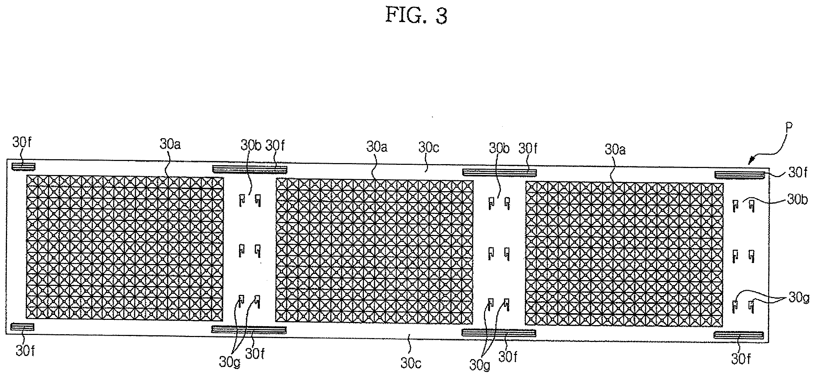

In addition, the rotating tub 3 includes a corrosion-resistant material such as aluminum, for example. As shown in FIG. 3, a plate P having a predetermined length and width is rolled into a cylindrical shape, and then opposite ends of the plate P are connected to each other through a welding process, so that the rotating tub body 30 is fabricated. After that, the front cover 31 and the rear cover 32, which are separately fabricated, are installed at both sides of the rotating tub body 30.

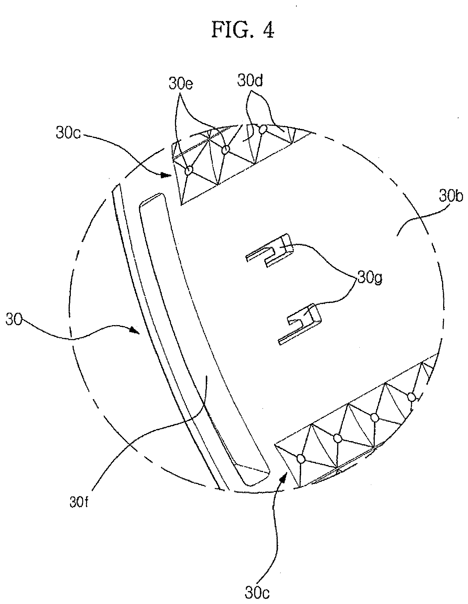

In the drum-type washing machine according to the present embodiment, the plate P used for the rotating tub body 30 has a plurality of concave-convex sections 30a, which are formed lengthwise along the plate P while being spaced apart from each other. Each concave-convex section 30a includes a plurality of concave-convex parts 30d (shown in FIG. 4) that cause friction between the laundry to effectively wash the laundry. Lifter installation sections 30b are installed between the concave-convex sections 30a. The lifter installation sections 30b have lifter installation holes 30g to install lifters 33 and are alternately formed with the concave-convex sections 30a lengthwise along the plate P. In addition, frames 30c are formed at upper and lower portions of the plate P to allow the front cover 31 and the rear cover 32 to be installed thereon after the rotating tub body 30 is manufactured using the plate P. In this case, the concave-convex part 30d included in the concave-convex section 30a is formed by recessing the plate P in a polygonal-conical shape. According to the present embodiment, the concave-convex section 30a is recessed in a quadrangular conical shape and a through-hole 30e is formed at a bottom point of the concave-convex section 30a to allow water to pass therethrough. Accordingly, as the rolling process is performed on the above plate P and both ends of the plate P are connected to each other, the cylindrical rotating tub body 30, in which the concave-convex section 30a and the lifter installation section 30b are alternately disposed on the inner peripheral surface of the rotating tub body 30 in the circumferential direction, can be obtained. In addition, in the drum-type washing machine according to the present embodiment, a reinforcement section 30f is formed to reinforce the strength of the lifter installation section 30b such that the lifter installation section 30b having a low strength relative to that of the concave-convex section 30a is prevented from being excessively deformed in the process of forming the rotating tub body 30 by rolling the plate P. Accordingly, the concave-convex section 30a and the lifter installation section 30b are uniformly deformed due to the reinforcement section 30f, so that the rotating tub body 30 is manufactured into a complete cylindrical shape.

According to the present embodiment, the reinforcement sections 30f are formed at both sides of the lifter installation section 30b in the frame 30c, respectively. The reinforcement sections 30f are formed such that a portion of the plate P forming the rotating tub body 30 is recessed to one side and protrudes to the other side. In this case, since the reinforcement section 30f serves to prevent the lifter installation section 30b from being extremely deformed in the rolling process, the reinforcement section 30f is formed lengthwise along the plate P and extends in a circumferential direction of the rotating tub body 30 when the fabricating of the reinforcement section 30f is completed. In addition, the reinforcement section 30f extends from both ends of the lifter installation section 30b such that both ends of the reinforcement section 30f are located in the frame 30c corresponding to both sides of the concave-convex section 30a, so that a deformation is prevented from occurring at a boundary area between the concave-convex section 30a and the lifter installation section 30b. The reinforcement section 30f is spaced apart from the concave-convex section 30a by a predetermined distance in a width direction of the plate P. That is, the reinforcement sections 30f are formed such that circumferential end portions of the reinforcement sections 30f are disposed at outer sides of two concave-convex sections 30a that are adjacent to each other.

Accordingly, if the cylindrical rotating tub body is manufactured by rolling the plate P described above, a portion of force that has been applied to the lifter installation section 30b during the rolling process is supported by the reinforcement section 30f, so that the lifter installation section 30b is prevented from being excessively deformed. Accordingly, the concave-convex section 30a and the lifter installation section 30b are uniformly deformed, so that the rotating tub body 30 is manufactured in a complete cylindrical shape as compared with the conventional rotating tub body 30 without the reinforcement section 30f. In addition, as described above, the reinforcement sections 30f are formed at both sides of the lifter installation section 30b, so that the deformation of the lifter installation section 30b is prevented when the rotating tub body is manufactured into the rotating tub body 30, thereby preventing the distortion of the rotating tub body 30.

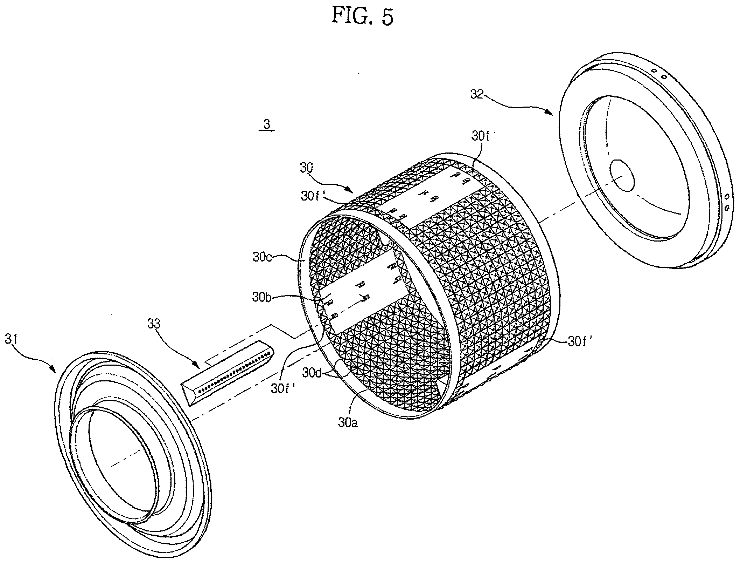

The reinforcement sections 30f according to the present embodiment are formed by processing the plate P such that the plate P is recessed to one side and protrudes to the other side. However, the present invention is not limited to the above embodiment. According to a second embodiment, as shown in FIG. 5, the reinforcement sections 30f' may have a shape substantially identical to the shape of the concave-convex part 30d of the concave-convex section 30a. In this case, each of the reinforcement sections 30f' is formed in parallel to the concave-convex parts 30d located at both edges of the concave-convex section 30a and extends on either side of the lifter installation section 30b.

According to the embodiment, a plurality of lifter installation sections 30b are formed on the rotating tub body 30 to mount the lifter 33 such that the lifter installation section 30b and the plural concave-convex sections 30a are alternatively formed on the rotating tub body 30, and the reinforcement section 30f is formed at both sides of the lifter installation section 30b. However, the present embodiment is not limited thereto and the reinforcement section 30b may be applied to a rotating tub body which does not have the lifter. That is, in the case of the rotating tub body 30 having no lifter, the lifter installation section 30b is not provided, so that the plural concave-convex sections 30a are formed on the rotating tub body 30 while being spaced apart from each other in the circumferential direction of the rotating tub body 30. In addition, the reinforcement section 30f extends in the circumferential direction of the rotating tub body 30 at both sides of the adjacent concave-convex sections 30a such that circumferentially both ends of the reinforcement section 30f are disposed at outer sides of the adjacent two concave-convex section 30a. Accordingly, a portion between the two concave-convex sections 30a is reinforced by the reinforcement section 30f.

Although the embodiment has been made in relation to a drum-type washing machine as an example, the present embodiments are not limited to the example and may be applied to another type of washing machine having a rotating tub body.

According to the present embodiments, a drum-type washing machine can reinforce a lifter installation section having a strength lower than that of a concave-convex section by using a reinforcement section so that an extreme deformation of the lifter installation section is prevented during a rolling process. Accordingly, the concave-convex section and the lifter installation section are uniformly deformed, so that a rotating tub body is manufactured in a complete cylindrical shape.

In addition, in the drum-type washing machine according to the present embodiments, the reinforcement section prevents the lifter installation section from being deformed, so that the distortion of the rotating tub body is prevented when the rotating tub body is fabricated for a rotating tub.

Although a few embodiments have been shown and described, it would be appreciated by those skilled in the art that changes may be made in these embodiments without departing from the principles of the invention, the scope of which is defined in the claims .

## Claims

1. A rotating tub body (30), comprising:
lifters (33) provided on an inner peripheral surface of the rotating tub body and spaced apart from each other,
a plurality of lifter installation sections (30b) provided on a plate (P) of the rotating tub body (30) to install the r lifters (33),
**being characterized in that**
the rotating tub body (30) further comprises:
a plurality of concave-convex sections (30a) provided on the plate (P) alternately with the lifter installation sections (30b), each concave-convex section (30a) including a plurality of concave-convex parts (30d),
reinforcement sections (30f, 30f') reinforcing strength of the lifter installation sections (30b), and frames (30c) provided at both sides of the plate (P) such that covers (31, 32) are able to be installed on the frames to cover both sides of the rotating tub body (30),
wherein the reinforcement sections (30f, 30f') are formed on the frames corresponding to both sides of the lifter installation sections (30b), are formed lengthwise along the plate (P) and extend in a circumferential direction of the rotating tub body (30) when the fabricating of the reinforcement sections (30f, 30f') is completed.

2. The rotating tub body (30) according to claim 1, wherein the reinforcement sections (30f, 30f') extend such that both ends of the reinforcement sections (30f, 30f') are located above and below the concave-convex sections (30a) when viewed in a width direction of the concave-convex sections (30a).

3. The rotating tub body (30) according to claim 2, wherein the reinforcement sections (30f, 30f') are formed on the frames (30c) while being spaced apart from the concave-convex sections (30a).

4. The rotating tub body (30) according to claim 1, wherein the reinforcement sections (30f) are formed by processing a portion of the rotating tub body (30) such that said portion is recessed at a first side of the rotating tub body (30) and is protruded at a second side of the rotating tub body (30).

5. The rotating tub body (30) according to claim 1, wherein the reinforcement sections (30f') have a shape identical to a shape of the concave-convex parts (30d) included in the concave-convex sections (30a).

6. The rotating tub body; (30) according to claim 5, wherein the reinforcement sections (30f') are disposed in parallel to the concave-convex parts (30d) located at both edges of the concave-convex sections (30a).

7. The rotating tub body (30) according to claim 1, wherein the rotating tub body (30) is formed in a cylindrical shape by rolling said plate (P) having a predetermined length and width.

8. A drum-type washing machine, comprising:
the rotating tub body (30) having a cylindrical shape according to one of the previous claims.

## Patentansprüche

1. Rotierender Laugenbehälterkörper (30), der umfasst:
Heber (33), die an einer inneren Umfangsfläche des rotierenden Laugenbehälterkörpers bereitgestellt werden und voneinander beabstandet sind,
eine Vielzahl von Heberinstallationsabschnitten (30b), die an einer Platte (P) des rotierenden Laugenbehälterkörpers (30) bereitgestellt werden, um die Heber (33) zu installieren,
**dadurch gekennzeichnet, dass**
der rotierende Laugenbehälterkörper (30) des Weiteren umfasst:
eine Vielzahl von konkav-konvexen Abschnitten (30a), die an der Platte (P) abwechselnd mit den Heberinstallationsabschnitten (30b) bereitgestellt werden,
wobei jeder konkav-konvexe Abschnitt (30a) eine Vielzahl von konkav-konvexen Teilen (30d) umfasst,
Verstärkungsabschnitte (30f, 30f'), die die Festigkeit der Heberinstallationsabschnitte (30b) verstärken, und Rahmen (30c), die an beiden Seiten der Platte (P) bereitgestellt werden, so dass Abdeckungen (31, 32) an den Rahmen installiert werden können, um beide Seiten des rotierenden Laugenbehälterkörpers (30) abzudecken, wobei die Verstärkungsabschnitte (30f, 30f'), die an den Rahmen entsprechend den beiden Seiten der Heberinstallationsabschnitte ausgebildet sind, in Längsrichtung entlang der Platte (P) gebildet werden und sich in einer Umfangsrichtung des rotierenden Laugenbehälterkörpers (30) erstrecken, wenn die Herstellung der Verstärkungsabschnitte (30f, 30f') abgeschlossen ist.

2. Rotierender Laugenbehälterkörper (30) nach Anspruch 1, wobei sich die Verstärkungsabschnitte (30f, 30f') so erstrecken, dass sich beide Enden der Verstärkungsabschnitte (30f, 30f') in einer Breitenrichtung der konkav-konvexen Abschnitte (30a) gesehen über und unter den konkav-konvexen Abschnitten (30a) befinden.

3. Rotierender Laugenbehälterkörper (30) nach Anspruch 2, wobei die Verstärkungsabschnitte (30f, 30f') an den Rahmen (30c) ausgebildet sind, während sie von den konkav-konvexen Abschnitten (30a) beabstandet sind.

4. Rotierender Laugenbehälterkörper (30) nach Anspruch 1, wobei die Verstärkungsabschnitte (30f) durch Bearbeiten eines Teils des rotierenden Laugenbehälterkörpers (30) gebildet werden, so dass dieser Teil an einer ersten Seite des rotierenden Laugenbehälterkörpers (30) ausgespart ist und an einer zweiten Seite des rotierenden Laugenbehälterkörpers (30) vorsteht.

5. Rotierender Laugenbehälterkörper (30) nach Anspruch 1, wobei die Verstärkungsabschnitte (30f') eine Form haben, die mit einer Form der in den konkav-konvexen Abschnitten (30a) enthaltenen konkav-konvexen Bauteile (30d) identisch ist.

6. Rotierender Laugenbehälterkörper (30) nach Anspruch 5, wobei die Verstärkungsabschnitte (30f') zu den konkav-konvexen Bauteilen (30d) parallel angeordnet sind, die sich an beiden Rändern der konkav-konvexen Abschnitte (30a) befinden.

7. Rotierender Laugenbehälterkörper (30) nach Anspruch 1, wobei der rotierende Laugenbehälterkörper (30) durch Walzen der Platte (P) mit einer vorgegebenen Länge und Breite in einer zylindrischen Form ausgebildet wird.

8. Trommelwaschmaschine, die umfasst:
den rotierenden Laugenbehälterkörper (30) mit einer zylindrischen Form nach einem der vorhergehenden Ansprüche.

## Revendications

1. Corps de cuve rotatif (30), comprenant :
des élévateurs (33) disposés sur une surface périphérique intérieure du corps de cuve rotatif et espacés les uns des autres,
une pluralité de sections d'installation d'élévateur (30b) disposées sur une plaque (P) du corps de cuve rotatif (30) pour installer les élévateurs (33),
qui est **caractérisé en ce que**
le corps de cuve rotatif (30) comprend en outre :
une pluralité de sections concaves-convexes (30a) disposées sur la plaque (P) en alternance avec les sections d'installation d'élévateur (30b), chaque section concave-convexe (30a) comprenant une pluralité de parties concaves-convexes (30d),
des sections de renforcement (30f, 30f') renforçant une résistance des sections d'installation d'élévateur (30b), et des cadres (30c) disposés des deux côtés de la plaque (P) de telle sorte que des couvercles (31, 32) sont capables d'être installés sur les cadres pour couvrir les deux côtés du corps de cuve rotatif (30),
dans lequel les sections de renforcement (30f, 30f) sont formées sur les cadres correspondant aux deux côtés des sections d'installation d'élévateur (30b), sont formées dans le sen de la longueur le long de la plaque (P) et s'étendent dans une direction circonférentielle du corps de cuve rotatif (30) lorsque la fabrication des sections de renforcement (30f, 30f') est achevée.

2. Corps de cuve rotatif (30) selon la revendication 1, dans lequel les sections de renforcement (30f, 30f') s'étendent de sorte que les deux extrémités des sections de renforcement (30f, 30f') sont situées au-dessus et au-dessous des sections concaves-convexes (30a) lorsqu'observées dans une direction de largeur des sections concaves-convexes (30a).

3. Corps de cuve rotatif (30) selon la revendication 2, dans lequel les sections de renforcement (30f, 30f') sont formées sur les cadres (30c) tout en étant espacées des sections concaves-convexes (30a).

4. Corps de cuve rotatif (30) selon la revendication 1, dans lequel les sections de renforcement (30f) sont formées en traitant une partie du corps de cuve rotatif (30) de sorte que ladite partie est en retrait sur un premier côté du corps de cuve rotatif (30) et fait saillie sur un second côté du corps de cuve rotatif (30).

5. Corps de cuve rotatif (30) selon la revendication 1, dans lequel les sections de renforcement (30f') ont une forme identique à une forme des parties concaves-convexes (30d) incluses dans les sections concaves-convexes (30a).

6. Corps de cuve rotatif (30) selon la revendication 5, dans lequel les sections de renforcement (30f') sont disposées parallèlement aux parties concaves-convexes (30d) situées sur les deux bords des sections concaves-convexes (30a).

7. Corps de cuve rotatif (30) selon la revendication 1, dans lequel le corps de cuve rotatif (30) est formé en une forme cylindrique en roulant ladite plaque (P) ayant une longueur et une largeur prédéterminées.

8. Machine à laver de type à tambour, comprenant :
le corps de cuve rotatif (30) ayant une forme cylindrique selon l'une des revendications précédentes.
